# EUROPÄISCHE PATENTSCHRIFT

(11) **EP 1 109 449 B1**
(45) Veröffentlichungstag und Bekanntmachung des Hinweises auf die Patenterteilung: **06.11.2002**
(21) Anmeldenummer: 99944495.3
(22) Anmeldetag: 24.08.1999
(51) Int. Cl.: A01N 25/28

(54) **MIKROKAPSEL-FORMULIERUNGEN**
MICROCAPSULE FORMULATIONS
FORMULATIONS DE MICROCAPSULES

(30) Priorität: 05.09.1998 DE 19840583
(43) Veröffentlichungstag der Anmeldung: 27.06.2001
(73) Patentinhaber: BAYER AG, 51368 Leverkusen (DE)
(72) Erfinder: WOLF, Hilmar, D-40764 Langenfeld (DE); WEISSMÜLLER, Joachim, D-40789 Monheim (DE); CIANCIULLI TELLER, Maria, Giuliana, D-42133 Wuppertal (DE)
(86) Internationale Anmeldenummer: EP9906200
(87) Internationale Veröffentlichungsnummer: WO00013504

(56) Entgegenhaltungen:
- EP-A- 0 322 820
- EP-A- 0 841 088
- GB-A- 2 206 492
- US-A- 5 342 556

## Beschreibung

Die vorliegende Erfindung betrifft neue Mikrokapsel-Formulierungen von agrochemischen Wirkstoffen, ein Verfahren zu deren Herstellung und deren Verwendung zur Applikation von agrochemischen Wirkstoffen.

Es ist bereits bekannt, agrochemische Wirkstoffe in Form von emulgierbaren Konzentraten oder benetzbaren Pulvern mit Wasser zu verrühren und die dabei entstehenden, anwendungsfertigen Spritzflüssigkeiten auf die Pflanzen zu sprühen. Nachteilig an diesem Verfahren ist, daß häufig ein hoher Aufwand betrieben werden muß, um einen ausreichenden Schutz für die Personen zu gewährleisten, die diese Spritzflüssigkeiten ausbringen.

Weiterhin wurde schon beschrieben, daß sich agrochemische Wirkstoffe in Form von wäßrigen Mikrokapsel-Suspensionen applizieren lassen (vgl. DE-A 3 016 189, DE-B 1 185 154, DE-B 1 248 016 und DE-A 2 734 577). Ungünstig ist jedoch, daß derartige Zubereitungen in vielen Fällen zur Agglomerisation neigen und die enthaltenen aktiven Komponenten nicht immer in der gewünschten Menge und über den angestrebten längeren Zeitraum freigesetzt werden.

Schließlich geht aus der DE-A 2 738 509 hervor, daß sich Farbstoffe mit Hilfe von 2H-1,3,5-Oxadiazin-2,4,6-(3H,5H)-trion-3,5-bis-(6-isocyanato-hex-1-yl) und mehrwertigen Aminen mikroverkapseln lassen. Der Einsatz des genannten Isocyanates zur Mikroverkapselung von agrochemischen Wirkstoffen wurde aber bisher noch nicht offenbart.

Die EP-A 0 841 088 bezieht sich auf Mikrokapseln, in denen ein Pflanzenbehandlungsmittel enthalten sein kann. Dabei wird das Wandmaterial der Kapseln mit Hilfe von Imino-oxadiazin-dionen erzeugt. Bis-(isocyanatohexyl)-oxadiazin-trion wird aber nicht als mögliche Komponente zur Wandbildung erwähnt.

In der US-A 5 342 556 wird unter (d) in Spalte 2 auch Bis-(isocyanatohexyl)-oxadiazin-trion als Baustein für Mikrokapseln aufgeführt. Die entsprechenden Mikrokapseln werden dann dadurch hergestellt, daß eines oder mehrere Isocyanate mit einem Polyethylenoxid-alkohol, also mit einem Polyether-alkohol, umgesetzt werden. Es werden jedoch keine Mikrokapsel-Formulierungen beschrieben, bei deren Zubereitung keine Ether-alkohole verwendet werden.

Es wurden nun neue Mikrokapsel-Formulierungen gefunden, die aus
A) einer teilchenförmigen dispersen Phase aus
   a) einem Reaktionsprodukt von
      - 2H-1,3,5-Oxadiazin-2,4,6-(3H,5H)-trion-3,5-bis-(6-isocyanato-hex-1-yl) der Formel 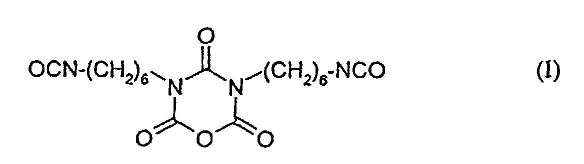 gegebenenfalls im Gemisch mit Toluylen-diisocyanat,
      mit
      Ethylendiamin-(1,2), Diethylentriamin, Triethylentetramin, Bis-(3-aminopropyl)amin, Bis-(2-methylaminoethyl)-methylamin, 1,4-Diamino-cyclohexan, 3-Amino-1-methyl-aminopropan, N-Methyl-bis-(3-aminopropyl)-amin, 1,4-Diamino-n-butan und 1,6-Diamino-n-hexan,
      Ethandiol, Propandiol-(1,2), Propandiol-(1,3), Butandiol-(1,4), Pentandiol-(1,5), Hexandiol-(1,6), Glycerin und/oder Diethylenglykol,
   b) einem fungiziden Wirkstoff aus der Gruppe der Amino-Derivate, der Morpholin-Derivate oder der Azol-Derivate
      und/oder
      einem insektiziden Wirkstoff aus der Gruppe der Phosphorsäureester, der Pyrethroide oder der Carbamate
      und/oder
      einem herbiziden Wirkstoff aus der Gruppe der Acetanilide
      sowie
   c) gegebenenfalls Zusatzstoffen besteht, wobei die Teilchen der dispersen Phase eine mittlere Partikelgröße zwischen 1 und 20 µm aufweisen
   und
B) einer flüssigen, wäßrigen Phase
   bestehen.

Weiterhin wurde gefunden, daß sich erfindungsgemäße Mikrokapsel-Formulierungen herstellen lassen, indem man
α) in einem ersten Schritt einen fungiziden Wirkstoff aus der Gruppe der Amino-Derivate, der Morpholin-Derivate oder der Azol-Derivate
   und/oder
   einen insektiziden Wirkstoff aus der Gruppe der Phosphorsäureester, der Pyrethroide oder der Carbamate
   und/oder
   einen herbiziden Wirkstoff aus der Gruppe der Acetanilide
   mit 2H-1,3,5-Oxadiazin-2,4,6-(3H,5H)-trion-3,5-bis-(6-isocyanato-hex-1-yl) der Formel 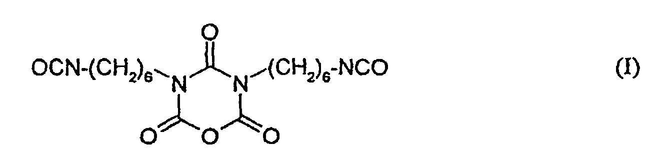 und gegebenenfalls mit Toluylendiisocyanat
   sowie gegebenenfalls mit einem organischen Lösungsmittel und gegebenenfalls einem Emulgator vermischt,
β) die so hergestellte Mischung dann in einem zweiten Schritt in Wasser, gegebenenfalls im Gemisch mit Zusatzstoffen, dispergiert
   und
γ) die so hergestellte Dispersion in einem dritten Schritt mit
   Ethylendiamin-(1,2), Diethylentriamin, Triethylentetramin, Bis-(3-aminopropyl)amin, Bis-(2-methylaminoethyl)-methylamin, 1,4-Diamino-cyclohexan, 3-Amino-1-methyl-aminopropan, N-Methyl-bis-(3-aminopropyl)-amin, 1,4-Diamino-n-butan und 1,6-Diamino-n-hexan,
   Ethandiol, Propandiol-(1,2), Propandiol-(1,3), Butandiol-(1,4), Pentandiol-(1,5), Hexandiol-(1,6), Glycerin und/oder Diethylenglykol,
   gegebenenfalls im Gemisch mit Wasser, sowie gegebenenfalls mit Zusatzstoffen versetzt.

Schließlich wurde gefunden, daß die erfindungsgemäßen Mikrokapsel-Formulierungen sehr gut zur Applikation der enthaltenen agrochemischen Wirkstoffe auf Pflanzen und/oder deren Lebensraum geeignet sind.

Es ist als äußerst überraschend zu bezeichnen, daß die erfindungsgemäßen Mikrokapsel-Formulierungen besser zur Applikation der enthaltenen agrochemischen Wirkstoffe geeignet sind als die konstitutionell ähnlichsten, vorbekannten Zubereitungen. Unerwartet ist vor allem, daß sich von den zahlreichen in Frage kommenden Isocyanaten gerade das 2H-1,3,5-Oxadiazin-2,4,6-(3H,5H)-trion-3,5-bis-(6-isocyanato-hex-1-yl) der Formel (I) besonders gut zur Herstellung von Mikrokapsel-Formulierungen mit den gewünschten Eigenschaften einsetzen läßt.

Die erfindungsgemäßen Mikrokapsel-Formulierungen zeichnen sich durch eine Reihe von Vorteilen aus. So sind sie in der Lage, die aktiven Komponenten über einen längeren Zeitraum in der jeweils erforderlichen Menge freizusetzen. Günstig ist auch, daß die Pflanzenverträglichkeit der enthaltenen Wirkstoffe verbessert wird und außerdem auch die akute Toxizität der aktiven Komponenten vermindert wird, so daß die Ausbringung der Mikrokapsel-Formulierungen für das Bedienungspersonal auch ohne große Sicherheitsvorkehrungen unproblematisch ist.

Die erfindungsgemäßen Mikrokapsel-Formulierungen sind durch die in der dispergierten und der flüssigen Phase enthaltenen Bestandteile charakterisiert.

In den erfindungsgemäßen Mikrokapsel-Formulierungen können einer oder mehrere der unter (b) aufgeführten agrochemischen Wirkstoffe enthalten sein.

Bevorzugte fungizide Wirkstoffe sind dabei Amino-Derivate, wie 8-(1,1-Dimethyl-ethyl)-N-ethyl-N-propyl-1,4-dioxaspiro[4,5]decan-2-methanamin (Spiroxamine) und Fenpropidin, und außerdem Morpholin-Derivate, wie Aldimorph, Dodemorph und Fenpropimorph.

Bevorzugte fungizide Wirkstoffe sind im vorliegenden Zusammenhang auch Triadimefon, Triadimenol, Bitertanol, Dichlobutrazol, Tebuconazol, Propiconazol, Difenoconazol, Cyproconazol, Flutriafol, Hexaconazol, Myclobutanil, Penconazol, Etaconazol, Bromuconazol, Epoxiconazol, Fenbuconazol, Tetraconazol, Diniconazol, Flusilazol, Prochloraz, Metconazol, Ipconazol, Fluquinconazol, Triticonazol, Triflumizol, Imibenconazol, Imazalil und 2-[2-(1-Chlor-cyclopropyl)-3-(2-chlorphenyl)-2-hydroxypropyl]-2,4-dihydro-[1,2,4]-triazol-3-thion.

Als insektizide Wirkstoffe der unter (b) aufgeführten Gruppen seien vorzugsweise genannt
Azinphos-methyl, Azinphos-ethyl, Bromophos A, Chlorpyriphos, Chlorpyriphos M, Dichlorphos, Edifenphos, Fenamiphos, Isofenphos, Malathion, Mesulfenphos, Parathion A, Parathion M, Pirimiphos, Profenofos, Pyraclophos, Tebupirimfos, Betacyfluthrin, Cyfluthrin, Cypermethrin, Transfluthrin und Lambda-cyhalothrin,
und ferner
Aldicarb, Aldoxycarb, Aminocarb, Bendiocarb, Bufencarb, Butacarb, Butocarboxim, Butoxycarboxim, 2-sek-Butyl-phenyl-methylcarbamat, Carbanolate, Carbaryl, Carbofuran, Cartap, Decarbofuran, Dimetilan, Dioxacarb, Ethiofencarb, Fenethacarb, Formetanate, Formparanate, Isoprocarb, Methiocarb, Methomyl, Mexacarbate, Nabam, Nitrilacarb, Oxamil, Pirimicarb, Promecarb, Propoxur, Thiofanox, Thiocarboxim Thiram, Trimethylphenyl-methylcarbamat, 3,4-Xylyl-methylcarbamat und 3,5-Xylyl-methylcarbamat.

Als herbizide Wirkstoffe der unter (b) aufgeführten Acetanilide seien vorzugsweise genannt:
Alachlor, Acetochlor, Butachlor, Metazachlor, Metolachlor, Petrilachlor und Propachlor.

Als Zusatzstoffe, die in den erfindungsgemäßen Mikrokapsel-Formulierungen enthalten sein können, kommen organische Solventien, Emulgatoren, Schutzkolloide, Verdicker, Konservierungsmittel, Entschäumer, Kältestabilisatoren und Neutralisationsmittel in Frage.

Als organische Solventien kommen dabei alle üblichen organischen Lösungsmittel in Betracht, die einerseits mit Wasser wenig mischbar sind, andererseits aber die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso®, Tetrachlormethan, Chloroform, Methylenchlorid und Dichlorethan, und außerdem auch Ester, wie Ethylacetat.

Als Emulgatoren kommen übliche, in Formulierungen von agrochemischen Wirkstoffen vorhandene oberflächenaktive Substanzen in Frage. Beispielhaft genannt seien ethoxylierte Nonylphenole, Polyethylenglykolether von linearen Alkoholen, Umsetzungsprodukte von Alkylphenolen mit Ethylenoxid und/oder Propylenoxid, weiterhin Fettsäureester, Alkylsulfonate, Alkylsulfate, Arylsulfate und Carbonsäure-amide, wie Decancarbonsäure-dimethyl-amid.

Als Schutzkolloide (Dispergiermittel) kommen alle üblicherweise für diesen Zweck eingesetzten Substanzen in Betracht. Vorzugsweise genannt seien natürliche und synthetische wasserlösliche Polymere, wie Gelatine, Stärke und Cellulose-Derivate, insbesondere Celluloseester und Celluloseether, wie Methylcellulose, ferner Polyvinylalkohole, teilhydrolysierte Polyvinylacetate, Ligninsulfonate, Polyvinylpyrrolidone und Polyacrylamide.

Als Verdicker kommen alle üblicherweise für diesen Zweck in Pflanzenbehandlungsmitteln einsetzbaren Stoffe in Frage. Bevorzugt sind Kelzan® (thixotropes Verdickungsmittel auf Xanthan-Basis), Kieselsäuren und Attapulgit.

Als Konservierungsmittel kommen alle üblicherweise für diesen Zweck in Pflanzenbehandlungsmitteln vorhandenen Substanzen in Betracht. Als Beispiele genannt seien Preventol® und Proxel®.

Als Entschäumer kommen alle üblicherweise für diesen Zweck in Pflanzenbehandlungsmitteln einsetzbaren Stoffe in Frage. Vorzugsweise genannt seien Silan-Derivate, wie Poly-dimethylsiloxane, und Magnesiumstearat.

Als Kältestabilisatoren können alle üblicherweise für diesen Zweck in Pflanzenbehandlungsmitteln einsetzbaren Stoffe fungieren. Beispielhaft genannt seien Harnstoff, Glycerin und Propylenglykol.

Als Neutralisierungsmittel kommen alle für diesen Zweck üblichen Säuren und Basen in Frage. Vorzugsweise genannt seien Ammoniak und Phosphorsäure.

Die Teilchen der dispersen Phase weisen eine mittlere Partikelgröße auf, die im allgemeinen zwischen 1 und 20 µm, vorzugsweise zwischen 3 und 15 µm liegt.

Die wäßrige Phase der erfindungsgemäßen Mikrokapsel-Formulierungen besteht im wesentlichen aus Wasser. Sie kann außerdem auch Zusatzstoffe, wie Emulgatoren, Schutzkolloide, Konservierungsmittel, Entschäumer und Kältestabilisatoren enthalten. Vorzugsweise kommen hierbei diejenigen Komponenten in Betracht, die für diese Substanzen bereits als bevorzugt genannt wurden. Darüber hinaus können in der wäßrigen Phase auch geringe Mengen organischer Solventien sowie an den übrigen Bestandteilen der dispersen Phase enthalten sein.

Die Zusammensetzung der erfindungsgemäßen Mikrokapsel-Formulierungen kann innerhalb eines bestimmten Bereiches variiert werden. Der Anteil der dispersen Phase in Bezug auf die gesamte Formulierung liegt im allgemeinen zwischen 30 und 70 Gew.-%, vorzugsweise zwischen 40 und 60 Gew.-%. Auch innerhalb der dispersen Phase kann der Anteil der einzelnen Bestandteile innerhalb eines bestimmten Bereiches variiert werden. So liegen in der dispersen Phase die Konzentrationen
- an Reaktionsprodukt aus 2H-1,3,5-Oxadiazin-2,4,6-(3H,5H)-trion-3,5-bis-(6-isocyanato-hex-1-yl) der Formel (I), gegebenenfalls im Gemisch mit Toluylendiisocyanat und
   Ethylendiamin-(1,2), Diethylentriamin, Triethylentetramin, Bis-(3-aminopropyl)amin, Bis-(2-methylaminoethyl)-methylamin, 1,4-Diamino-cyclohexan, 3-Amino-1-methyl-aminopropan, N-Methyl-bis-(3-aminopropyl)-amin, 1,4-Diamino-n-butan und 1,6-Diamino-n-hexan,
   Ethandiol, Propandiol-(1,2), Propandio-(1,3), Butandiol-(1,4), Pentandiol-(1,5), Hexandiol-(1,6), Glycerin und/oder Diethylenglykol,
   im allgemeinen zwischen 1 und 12 Gew.-%, vorzugsweise zwischen 2 und 10 Gew.-%,
- an agrochemischen Wirkstoffen im allgemeinen zwischen 10 und 90 Gew.-%, vorzugsweise zwischen 15 und 85 Gew.-% und
- an Zusatzstoffen im allgemeinen zwischen 0 und 85 Gew.-%, vorzugsweise zwischen 10 und 80 Gew.-%.

Die Herstellung der erfindungsgemäßen Mikrokapsel-Formulierungen erfolgt nach der Verfahrensweise der Mikroverkapselung.

Im allgemeinen geht man dabei so vor, daß man im ersten Schritt des Verfahrens (Stufe α) eine Lösung aus einem oder mehreren agrochemischen Wirkstoffen, Isocyanat der Formel (I) gegebenenfalls im Gemisch mit Toluylendiisocyanat sowie gegebenenfalls aus organischem Lösungsmittel und Emulgator herstellt. Handelt es sich bei dem agrochemischen Wirkstoff um eine Festsubstanz, so setzt man diesen im allgemeinen in Form einer Lösung in einem organischen Solvens ein. Ist der agrochemische Wirkstoff bei Raumtemperatur flüssig, so erübrigt sich die Verwendung eines organischen Lösungsmittels. Als agrochemische Wirkstoffe, organische Lösungsmittel und Emulgatoren kommen hierbei vorzugsweise diejenigen Substanzen in Frage, die bereits im Zusammenhang mit der Beschreibung der erfindungsgemäßen Mikrokapsel-Formulierungen als bevorzugt genannt wurden.

Die Mengen an den einzelnen Bestandteilen werden so gewählt, daß sie in der resultierenden dispersen Phase in den Konzentrationen vorliegen, die schon als bevorzugt genannt wurden. Dabei kann das Verhältnis von Isocyanat der Formel (I) zu Toluylendiisocyanat in einem bestimmten Verhältnis variiert werden. Auf 1 Gew.-Teil an Isocyanat der Formel (I) setzt man im allgemeinen zwischen 0 und 10 Gew.-Teile, vorzugsweise zwischen 0 und 5 Gew.-Teile an Toluylendiisocyanat ein.

Die in der Stufe α des erfindungsgemäßen Verfahrens hergestellte Lösung wird im zweiten Schritt des Verfahrens (Stufe β) in Wasser, gegebenenfalls im Gemisch mit Zusatzstoffen, dispergiert.

Als Zusatzstoffe kommen hierbei Schutzkolloide und Emulgatoren in Betracht. Vorzugsweise in Frage kommen diejenigen Substanzen, die bereits im Zusammenhang mit der Beschreibung der erfindungsgemäßen Mikrokapsel-Formulierungen als Schutzkolloide bzw. Emulgatoren bevorzugt genannt wurden.

Zur Herstellung der Dispersionen können alle für derartige Zwecke üblichen Apparate eingesetzt werden, die starke Scherkräfte erzeugen. Beispielhaft genannt seien Rotor-Stator-Mischer und Strahldispergatoren.

Die in der Stufe β des erfindungsgemäßen Verfahrens hergestellte Dispersion wird im dritten Schritt des Verfahrens (Stufe γ) unter Rühren zunächst mit mindestens einem Ethylendiamin-(1,2), Diethylentriamin, Triethylentetramin, Bis-(3-aminopropyl)-amin, Bis-(2-methylaminoethyl)-methylamin, 1,4-Diamino-cyclohexan, 3-Amino-1-methyl-aminopropan, N-Methyl-bis-(3-aminopropyl)-amin, 1,4-Diamino-n-butan und 1,6-Diamino-n-hexan, Ethandiol, Propandiol-(1,2), Propandiol-(1,3), Butandiol-(1,4), Pentandiol-(1,5), Hexandiol-(1,6), Glycerin und/oder Diethylenglykol, versetzt und nach Beendigung der eintretenden Reaktion gegebenenfalls noch mit Zusatzstoffen versetzt.

Als Zusatzstoffe kommen bei der Durchführung der Stufe γ des erfindungsgemäßen Verfahrens Verdicker, Konservierungsmittel, Entschäumer und Kältestabilisatoren in Frage. Vorzugsweise verwendbar sind dabei diejenigen Substanzen, die bereits im Zusammenhang mit der Beschreibung der erfindungsgemäßen Mikrokapsel-Formulierungen als bevorzugte Verdicker, Konservierungsmittel, Entschäumer und Kältestabilisatoren genannt wurden.

Bei der Durchführung des erfindungsgemäßen Verfahrens kann das Verhältnis von Isocyanat zu Amin- bzw. Alkohol-Komponenten in einem bestimmten Bereich variiert werden. Im allgemeinen setzt man auf 1 Mol an Isocyanat 0,8 bis 1,5 Äquivalente an Amin- bzw. Alkohol-Komponente ein. Bevorzugt wählt man die Mengen an Isocyanat und Amin bzw. Alkohol so, daß äquimolare Mengen an Isocyanat-Gruppen und an Amino- bzw. Hydroxy-Gruppen vorhanden sind.

Die Reaktionstemperaturen können bei der Durchführung des erfindungsgemäßen Verfahrens innerhalb eines bestimmten Bereiches variiert werden. Man arbeitet bei der Durchführung
- der ersten Stufe im allgemeinen bei Temperaturen zwischen 0°C und 40°C, vorzugsweise zwischen 2°C und 30°C,
- der zweiten Stufe im allgemeinen bei Temperaturen zwischen -10°C und +40°C, vorzugsweise zwischen 0°C und 30°C und
- der dritten Stufe im allgemeinen bei Temperaturen zwischen 0°C und 80°C, vorzugsweise zwischen 10°C und 75°C.

Das erfindungsgemäße Verfahren wird im allgemeinen unter Atmosphärendruck durchgeführt.

Die erfindungsgemäßen Mikrokapsel-Formulierungen eignen sich hervorragend zur Applikation der enthaltenen agrochemischen Wirkstoffe auf Pflanzen und/oder deren Lebensraum. Sie gewährleisten die Freisetzung der aktiven Komponenten in der jeweils gewünschten Menge über einen längeren Zeitraum.

Die erfindungsgemäßen Mikrokapsel-Formulierungen können entweder als solche oder nach vorherigem Verdünnen mit Wasser in der Praxis eingesetzt werden. Die Anwendung erfolgt dabei nach üblichen Methoden, also z.B. durch Gießen, Verspritzen oder Versprühen.

Die Aufwandmenge an den erfindungsgemäßen Mikrokapsel-Formulierungen kann innerhalb eines größeren Bereiches variiert werden. Sie richtet sich nach den jeweiligen agrochemischen Wirkstoffen und nach deren Gehalt in den Mikrokapsel-Formulierungen.

Die Erfindung wird durch die folgenden Beispiele veranschaulicht.

### Herstellungsbeispiele

### Beispiel 1

Eine Lösung aus 75,8 g Fenamiphos, 45,3 g Solvesso® 200, 1,8g 2H-1,3,5-Oxadiazin-2,4,6-(3H,5H)-trion-3,5-bis-(6-isocyanato-hex-1-yl) und 3 g Toluylendiisocyanat wird bei 25°C mit Hilfe eines Dispergators bei 11 500 Umdrehungen pro Minute innerhalb von einer Minute in 140,3 g einer 1 gew.-%igen Lösung von Polyvinylalkohol (Mowiol 26-88®) in Wasser im Gemisch mit 0,06 g eines Silicon-Entschäumers dispergiert. Danach werden 3 g einer 50 gew.-%igen Lösung von Diethylentriamin in Wasser hinzugegeben. Das dabei entstehende Reaktionsgemisch wird innerhalb von 2 Stunden auf 70°C aufgeheizt und dann unter langsamem Rühren weitere 4 Stunden auf 70°C gehalten. Nach dem anschließenden Abkühlen auf Raumtemperatur werden 30 g einer 2 gew.-%igen Lösung von Kelzan S (Verdicker auf Xanthan-Basis) in Wasser und 0,54 Konservierungsmittel (Preventol® D7) hinzugefügt. Man erhält auf diese Weise 300 g einer Mikrokapsel-Formulierung mit einem Fenamiphos-Gehalt von 240 g/l und einer mittleren Partikelgröße von 6,6 µm.

### Beispiel 2

Eine Lösung aus 126,4 g Fenamiphos, 73,6 g Solvesso® 200, 4,6 g 2H-1,3,5-Oxadiazin-2,4,6-(3H,5H)-trion-3,5-bis-(6-isocyanato-hex-1-yl) und 3,9 g Toluylendiisocyanat wird bei 25°C mit Hilfe eines Dispergators bei 6000 Umdrehungen pro Minute innerhalb von einer Minute in 236,8 g einer 1 gew.-%igen Lösung von Polyvinylalkohol (Mowiol 26-88®) in Wasser im Gemisch mit 0,1 g eines Silicon-Entschäumers dispergiert. Danach werden 4,6 g einer 50 gew.-%igen Lösung von Diethylentriamin in Wasser hinzugegeben. Das dabei entstehende Reaktionsgemisch wird innerhalb von 2 Stunden auf 70°C aufgeheizt und dann unter langsamem Rühren weitere 4 Stunden auf 70°C gehalten. Nach dem anschließenden Abkühlen auf Raumtemperatur werden 50 g einer 2 gew.-%igen Lösung von Kelzan S (Verdicker auf Xanthan-Basis) in Wasser und 0,9 Konservierungsmittel (Preventol® D7) hinzugefügt. Man erhält auf diese Weise 500 g einer Mikrokapsel-Formulierung mit einem Fenamiphos-Gehalt von 240 g/l und einer mittleren Partikelgröße von 5,0 µm.

### Beispiel 3

Eine Lösung aus 1955 g Spiroxamine, 145 g Xylol und 227 g 2H-1,3,5-Oxadiazin-2,4,6-(3H,5H)-trion-3,5-bis-(6-isocyanato-hex-1-nyl) wird bei 2°C mit Hilfe eines Dispergators bei 8000 Umdrehungen pro Minute innerhalb von 3 Minuten in 3017 g einer 1 gew.-%igen Lösung von Polyvinylalkohol (Mowiol 26-88®) in Wasser dispergiert. Danach werden innerhalb von 2 Minuten 205 g einer 20 gew.-%igen Lösung von Diethylentriamin in Wasser hinzugegeben. Das dabei entstehende Reaktionsgemisch wird unter Rühren 4 Stunden auf 55°C erhitzt. Nach dem anschließenden Abkühlen auf Raumtemperatur werden 450 g einer 2 gew.-%igen Lösung von Kelzan S (Verdicker auf Xanthan-Basis) hinzugefügt. Durch Zugabe von 25 %iger wäßriger Ammoniak-Lösung wird der pH-Wert der Formulierung auf 7 gebracht. Man erhält auf diese Weise eine Mikrokapsel-Formulierung mit einem Spiroxamine-Gehalt von 300 g/l.

### Beispiel 4

Eine Lösung aus 123,33 g Fenpropidin, 27,48 g Decancarbonsäuredimethylamid und 15,18 g 2H-1,3,5-Oxadiazin-2,4,6-(3 H,5H)-trion-3,5-bis-(6-isocyanato-hex-1-yl) wird bei 15°C mit Hilfe eines Dispergators bei 8000 Umdrehungen pro Minute innerhalb von 30 Sekunden in 376 g einer 1 gew.-%igen Lösung von Polyvinylalkohol (Mowiol 26-88®) in Wasser dispergiert. Danach werden unter langsamem Rühren 13,02 g einer 20 gew.-%igen Lösung von Diethylen-triamin in Wasser innerhalb von 2 Minuten zugefügt. Das dabei entstehende Reaktionsgemisch wird unter weiterem Rühren 4 Stunden auf 55°C erhitzt. Anschließend gibt man 1,4 ml einer 25 %igen wäßrigen Ammoniak-Lösung hinzu und rührt noch 30 Minuten bei 55°C. Danach wird auf Raumtemperatur abgekühlt, durch Zugabe von konzentrierter Phosphorsäure auf einen pH-Wert von 7 gebracht und mit 45 g einer 2 gew.-%igen Lösung von Kelzan S (Verdicker auf Xanthan-Basis) versetzt. Man erhält auf diese Weise eine Mikrokapsel-Formulierung mit einem Fenpropidin-Gehalt von 200 g/l.

### Beispiel 5

Eine Mischung aus 180,0 g Tebupirimphos und 9,1 g 2H-1,3,5-Oxadiazin-2,4,6-(3H, 5H)-trion-3,5-bis-(6-isocyanato-hex-1-yl) wird bei 9 - 11°C mit Hilfe eines Dispergators bei 8000 Upm in 245,5 g einer 1 gew.-%igen Lösung von Polyvinylalkohol (Mowiol 26-88®) im Gemisch mit 0,1 g eines Silikon-Entschäumers dispergiert. Danach werden 15,3 g einer 10 gew.-%igen Lösung von Diethylen-triamin in Wasser hinzugegeben. Das dabei entstehende Reaktionsgemisch wird innerhalb von 2 Stunden auf 55°C aufgeheizt und dann unter langsamen Rühren weitere 4 Stunden auf 55°C gehalten. Nach dem anschließenden Abkühlen auf Raumtemperatur werden 50 g einer 40 gew.-%igen Lösung von Polyethylenglykol in Wasser hinzugefügt. Man erhält auf diese Weise 500 g einer Mikrokapsel-Formulierung mit einem Tebupirimphos-Gehalt von 360 g/l und einer mittleren Partikelgröße von 8,0 µm.

### Beispiel 6

Eine Lösung aus 30,3 g β-Cyfluthrin, 89,9 g Solvesso 200®, 0,24 g Tristyrylphenolethoxylat, 0,58 g Toluylendiisocyanat und 0,34 2H-1,3,5-Oxadiazin-2,4,6-(3H, 5H)-trion-3,5-bis-(6-isocyanato-hex-1-yl) wird mit Hilfe eines Dispergators bei 10 000 Upm innerhalb von einer Minute in 147,4 g einer 1 gew.-%igen Lösung von Polyvinylalkohol (Mowiol 26-88®) in Wasser im Gemisch mit 0,06 g eines Silikon-Entschäumers bei 15°C dispergiert. Danach werden 0,57 g einer 50 gew.-%igen Lösung von Diethylen-triamin in Wasser zugegeben. Das dabei entstehende Reaktionsgemisch wird innerhalb von einer Stunde auf 70°C aufgeheizt und unter langsamen Rühren weitere 4 Stunden auf 70°C gehalten. Nach dem anschließenden Abkühlen auf Raumtemperatur werden 30,0 g einer 2 gew.-%igen Lösung von Kelzan S® (Verdicker auf Xanthan-Basis) in Wasser und 0,54 g Konservierungsmittel (Preventol® D7) hinzugefügt.. Man erhält auf diese Weise 300 g einer Mikrokapsel-Formulierung mit einem β-Cyfluthrin-Gehalt von 100 g/l und einer mittleren Partikelgröße von 4,7 µm.

### Verwendungsbeispiel

Zum Überprüfen der Wirkstoff-Freisetzung werden jeweils 3 g einer Mikrokapsel-Formulierung in 1 Liter Wasser suspendiert und 48 Stunden bei Raumtemperatur gerührt. Danach werden jeweils 5 ml entnommen und zur Abtrennung der Mikrokapseln zentrifugiert. In der verbleibenden wäßrigen Phase wird nach der HPLC-Methode der Gehalt an Wirkstoff bestimmt.

Die Ergebnisse gehen aus der nachstehenden Tabelle hervor.

**Tabelle 1**

| Beispiel Nr. | Gehalt an Wirkstoff |
|---|---|
| 1 | 117 ppm |
| 2 | 26 ppm |

## Patentansprüche

1. Mikrokapsel-Formulierungen, bestehend aus
A) einer teilchenförmigen dispersen Phase aus
a) einem Reaktionsprodukt von
- 2H-1,3,5-Oxadiazin-2,4,6-(3H,5H)-trion-3,5-bis-(6-isocyanato-hex-1-yl) der Formel 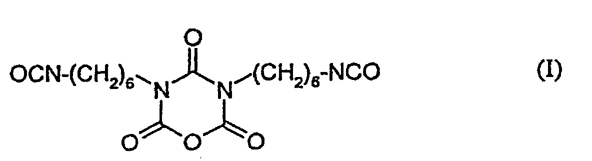 gegebenenfalls im Gemisch mit Toluylen-diisocyanat,
mit
Ethylendiamin-(1,2), Diethylentriamin, Triethylentetramin, Bis-(3-aminopropyl)-amin, Bis-(2-methylaminoethyl)-methylamin, 1,4-Diamino-cyclohexan, 3-Amino-1-methyl-aminopropan, N-Methyl-bis-(3-aminopropyl)-amin, 1,4-Diamino-n-butan und 1,6-Diamino-n-hexan,
Ethandiol, Propandiol-(1,2), Propandio-(1,3), Butandiol-(1,4), Pentandiol-(1,5), Hexandiol-(1,6), Glycerin und/oder Diethylenglykol,
b) einem fungiziden Wirkstoff aus der Gruppe der Amino-Derivate, der Morpholin-Derivate oder der Azol-Derivate
und/oder
einem insektiziden Wirkstoff aus der Gruppe der Phosphorsäureester, der Pyrethroide oder der Carbamate
und/oder
einem herbiziden Wirkstoff aus der Gruppe der Acetanilide
sowie
c) gegebenenfalls Zusatzstoffen besteht, wobei die Teilchen der dispersen Phase eine mittlere Partikelgröße zwischen 1 und 20 µm aufweisen
und
B) einer flüssigen, wäßrigen Phase.

2. Mikrokapsel-Formulierungen gemäß Anspruch 1, **dadurch gekennzeichnet, daß** als fungizider Wirkstoff Spiroxamine enthalten ist.

3. Mikrokapsel-Formulierungen gemäß Anspruch 1, **dadurch gekennzeichnet, daß** als fungizider Wirkstoff Fenpropidin enthalten ist.

4. Mikrokapsel-Formulierungen gemäß Anspruch 1, **dadurch gekennzeichnet, daß** als insektizider Wirkstoff Fenamiphos enthalten ist.

5. Mikrokapsel-Formulierungen gemäß Anspruch 1, **dadurch gekennzeichnet, daß** als insektizider Wirkstoff Tebupirimfos enthalten ist.

6. Mikrokapsel-Formulierungen gemäß Anspruch 1, **dadurch gekennzeichnet, daß** als insektizider Wirkstoff Cyflutrin enthalten ist.

7. Mikrokapsel-Formulierungen gemäß Anspruch 1, **dadurch gekennzeichnet, daß** als insektizider Wirkstoff Betacyfluthrin enthalten ist.

8. Verfahren zur Herstellung von Mikrokapsel-Formulierungen gemäß Anspruch 1, **dadurch gekennzeichnet, daß** man
α) in einem ersten Schritt einen fungiziden Wirkstoff aus der Gruppe der Amino-Derivate, der Morpholin-Derivate oder der Azol-Derivate
und/oder
einen insektiziden Wirkstoff aus der Gruppe der Phosphorsäureester, der Pyrethroide oder der Carbamate
und/oder
einen herbiziden Wirkstoff aus der Gruppe der Acetanilide
mit 2H-1,3,5-Oxadiazin-2,4,6-(3H,5H)-trion-3,5-bis-(6-isocyanato-hex-1-yl) der Formel 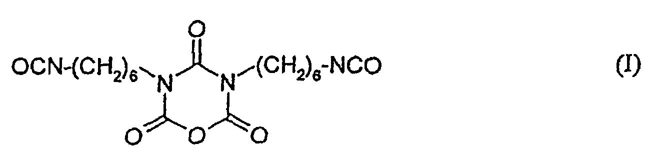 und gegebenenfalls mit Toluylendiisocyanat
sowie gegebenenfalls mit einem organischen Lösungsmittel und gegebenenfalls einem Emulgator vermischt,
β) die so hergestellte Mischung dann in einem zweiten Schritt in Wasser, gegebenenfalls im Gemisch mit Zusatzstoffen, dispergiert
und
γ) die so hergestellte Dispersion in einem dritten Schritt mit
Ethylendiamin-(1,2), Diethylentriamin, Triethylentetramin, Bis-(3-aminopropyl)-amin, Bis-(2-methylaminoethyl)-methylamin, 1,4-Diamino-cyclohexan, 3-Amino-1-methyl-aminopropan, N-Methyl-bis-(3-aminopropyl)-amin, 1,4-Diamino-n-butan und 1,6-Diamino-n-hexan,
Ethandiol, Propandiol-(1,2), Propandiol-(1,3), Butandiol-(1,4), Pentandiol-(1,5), Hexandiol-(1,6), Glycerin und/oder Diathylenglykol,
gegebenenfalls im Gemisch mit Wasser, sowie gegebenenfalls mit Zusatzstoffen versetzt.

9. Verwendung von Mikrokapsel-Formulierungen gemäß Anspruch 1 zur Applikation der enthaltenen agrochemischen Wirkstoffe auf Pflanzen und/oder deren Lebensraum.

## Claims

1. Microcapsule formulations composed of
A) a particulate disperse phase of
a) a reaction product of
- 2H-1,3,5-oxadiazine-2,4,6-(3H,5H)-trione-3,5-bis-(6-isocyanato-hex-1-yl), of the formula 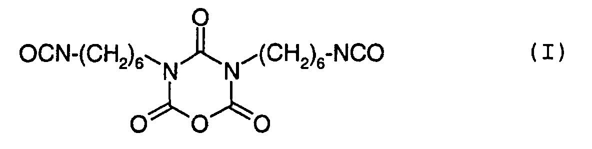 if appropriate in a mixture with toluylene diisocyanate,
and
ethylene-1,2-diamine, diethylenetriamine, triethylenetetramine, bis(3-aminopropyl)amine, bis(2-methylaminoethyl)methylamine, 1,4-diaminocyclohexane, 3-amino-1-methylaminopropane, N-methylbis(3-aminopropyl)amine, 1,4-diamino-n-butane and 1,6-diamino-n-hexane,
ethanediol, propane-1,2-diol, propane-1,3-diol, butane-1,4-diol, pentane-1,5-diol, hexane-1,6-diol, glycerol and/or diethylene glycol,
b) a fungicidally active compound from the group of the amino derivatives, the morpholine derivatives or the azole derivatives
and/or
an insecticidally active compound from the group of the phosphoric esters, the pyrethroids or the carbamates
and/or
a herbicidal active compound from the group of the acetanilides
and
c) if appropriate, additives, the particles of the disperse phase having a mean particle size of between 1 and 20 µm
and
B) a liquid aqueous phase.

2. Microcapsule formulations according to Claim 1, **characterized in that** the fungicidally active compound which it comprises is spiroxamine.

3. Microcapsule formulations according to Claim 1, **characterized in that** the fungicidally active compound which it comprises is fenpropidin.

4. Microcapsule formulations according to Claim 1, **characterized in that** the insecticidally active compound which it comprises is fenamiphos.

5. Microcapsule formulations according to Claim 1, **characterized in that** the insecticidally active compound which it comprises is tebupirimfos.

6. Microcapsule formulations according to Claim 1, **characterized in that** the insecticidally active compound which it comprises is cyfluthrin.

7. Microcapsule formulations according to Claim 1, **characterized in that** the insecticidally active compound which it comprises is beta-cyfluthrin.

8. Process for the preparation of microcapsule formulations according to Claim 1, **characterized in that**
α) in a first step, a fungicidally active compound from the group of the amino derivatives, the morpholine derivatives or the azole derivatives
and/or
an insecticidally active compound from the group of the phosphoric esters, the pyrethroids or the carbamates
and/or
a herbicidally active compound from the group of the acetanilides
is/are mixed with 2H-1,3,5-oxadiazine-2,4,6-(3H,5H)-trione-3,5-bis-(6-isocyanato-hex-1-yl), of the formula 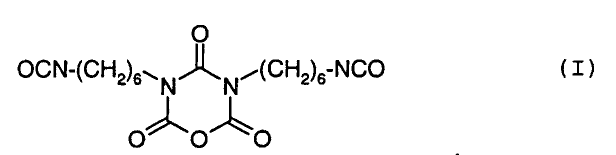 and, if appropriate, with toluylene diisocyanate
and, if appropriate, with an organic solvent and, if appropriate, an emulsifier,
β) then, in a second step, dispersing the resulting mixture in water, if appropriate as a mixture with additives,
and
γ) in a third step, adding ethylene-1,2-diamine, diethylenetriamine, triethylenetetramine, bis(3-aminopropyl )amine, bis(2-methylamino-ethyl)methylamine, 1,4-diaminocyclohexane, 3-amino-1-methylaminopropane, N-methylbis(3-aminopropyl)amine, 1,4-diamino-n-butane and 1,6-diamino-n-hexane,
ethanediol, propane-1,2-diol, propane-1,3-diol, butane-1,4-diol, pentane-1,5-diol, hexane-1,6-diol, glycerol and/or diethylene glycol,
if appropriate as a mixture with water, and, if appropriate, additives to the resulting dispersion.

9. Use of microcapsule formulations according to Claim 1 for applying the agrochemically active compounds which they comprise to plants and/or their environment.

## Revendications

1. Formulations de microcapsules, consistant en :
A) une phase particulaire dispersée constituée de
a) un produit de réaction de :
- la 2H-1,3,5-oxadiazin-2,4,6-(3H,5H)-trione-3,5-bis(6-isocyanatohex-1-yle) de formule : 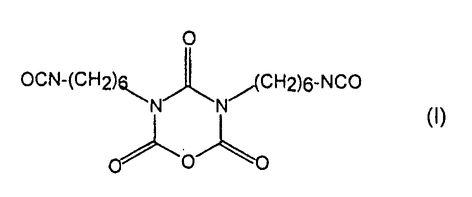
le cas échéant, en mélange avec le toluylènediisocyanate, avec
l'éthylènediamine-(1,2), la diéthylènetriamine, le triéthylènetétramine, la bis(3-aminopropyl)amine, la bis(2-méthylaminoéthyl)méthylamine, le 1,4-diaminocyclohexane, le 3-amine-1-méthylaminopropane, la N-méthyl-bis(3-aminopropyl)amine, le 1,4-diamino-n-butane et le 1,6-diamino-n-hexane;
l'éthanediol, le propanediol-(1,2), le propanediol-(1,3), le butanediol-(1,4), le pentanediol-(1,5), l'hexanediol-(1,6), la glycérine et/ou le diéthylèneglycol ;
b) un agent actif fongicide parmi le groupe des dérivés amino, des dérivés morpholino ou des dérivés azole, et/ou
un agent actif insecticide parmi le groupe des esters d'acide phosphorique, des pyréthroïdes ou des carbamates, et/ou
un agent actif herbicide parmi le groupe des acétanilides, ainsi que
c) le cas échéant, des additifs, où les particules de la phase dispersée présentent une granulométrie moyenne allant de 1 à 20 µm, et
B) une phase aqueuse liquide.

2. Formulations de microcapsules suivant la revendication 1, **caractérisées en ce que** la spiroxamine est présente comme agent actif fongicide.

3. Formulations de microcapsules suivant la revendication 1, **caractérisées en ce que** la fenpropidine est présente comme agent actif fongicide.

4. Formulations de microcapsules suivant la revendication 1, **caractérisées en ce que** le fenamiphos est présent comme agent actif insecticide.

5. Formulations de microcapsules suivant la revendication 1, **caractérisées en ce que** le tebupirimfos est présent comme agent actif insecticide.

6. Formulations de microcapsules suivant la revendication 1, **caractérisées en ce que** la cyflutrine est présente comme agent actif insecticide.

7. Formulations de microcapsules suivant la revendication 1, **caractérisées en ce que** la betacyfluthrine est présente comme agent actif insecticide.

8. Procédé de préparation des formulations de microcapsules suivant la revendication 1, **caractérisé en ce que**
α) dans une première étape, on mélange un agent actif fongicide parmi le groupe des dérivés amino, des dérivés morpholino ou des dérivés azole, et/ou
un agent actif insecticide parmi le groupe des esters d'acide phosphorique, des pyréthroïdes ou des carbamates, et/ou
un agent actif herbicide parmi le groupe des acétanilides,
avec la 2H-1,3,5-oxadiazin-2,4,6-(3H,5H)-trione-3,5-bis(6-isocyanatohex-1-yle) de formule : 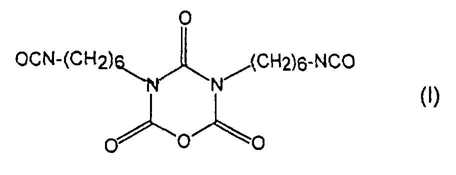 et le cas échéant, en mélange avec le toluylènediisocyanate,
ainsi que le cas échéant, avec un solvant organique et le cas échéant, un émulsionnant ;
β) on disperse alors dans une deuxième étape, le mélange ainsi préparé, dans l'eau, le cas échéant en mélange avec des additifs, et
γ) on ajoute dans une troisième étape, à la dispersion ainsi préparée,
l'éthylènediamine-(1,2), la diéthylènetriamine, le triéthylènetétramine, la bis(3-aminopropyl)amine, la bis(2-méthylaminoéthyl)méthylamine, le 1,4-diaminocyclohexane, le 3-amino-1-méthylaminorpopane, la N-méthyl-bis(3-aminopropyl)amine, le 1,4-diamino-n-butane et le 1,6-diamino-n-hexane ;
l'éthanediol, le propanediol-(1,2), le propanediol-(1,3), le butanediol-(1,4), le pentanediol-(1,5), l'hexanediol-(1,6), la glycérine et/ou le diéthylèneglycol,
le cas échéant, en mélange dans l'eau, ainsi que le cas échéant avec des additifs.

9. Utilisation de formulations de microcapsules suivant la revendication 1, pour l'application des agents actifs agrochimiques qu'elles contiennent, sur des végétaux et/ou leur biotope.
